# EUROPÄISCHE PATENTSCHRIFT

(11) **EP 4 067 667 B1**
(45) Veröffentlichungstag und Bekanntmachung des Hinweises auf die Patenterteilung: **08.10.2025**
(21) Anmeldenummer: 21166246.5
(22) Anmeldetag: 31.03.2021
(51) Int. Cl.: F04D 29/02, F04D 29/42, B29C 49/20, B29L 31/00

(54) **ANORDNUNG FÜR DEN TRANSPORT VON MEDIEN UND VERFAHREN ZU DEREN HERSTELLUNG**
ASSEMBLY FOR TRANSPORTING MEDIA AND METHOD OF FABRICATION ASSOCIATED
AGENCEMENT POUR LE TRANSPORT DE MILIEUX ET MÖTHODE DE FABRICATION ASSOCIÉE

(43) Veröffentlichungstag der Anmeldung: 05.10.2022
(73) Patentinhaber: TI Automotive Technology Center GmbH, 76437 Rastatt (DE)
(72) Erfinder: Boecker, Albert, 76275 Ettlingen (DE); Winter, Matthias, 76437 Rastatt (DE); Schaefer, Thorsten, 76889 Steinfeld (DE); Deibel, Florian, 76547 Sinzheim (DE); Tuzin, Artem, 76297 Stutensee (DE)
(74) Vertreter: Novagraaf Group

(56) Entgegenhaltungen:
- DE-A1- 102006 006 469
- US-A- 5 104 472
- US-A1- 2004 090 088

## Beschreibung

Die Erfindung betrifft eine Anordnung für den Transport von Medien, umfassend einen als Blasformteil ausgebildeten Grundkörper und zumindest ein Funktionselement.

Anordnungen für den Transport von Medien werden beispielsweise in der Elektromobilität benötigt. Akkumulatoren von Elektrofahrzeugen, insbesondere Lithium-Ionen-Akkumulatoren, weisen eine optimale Leistungsfähigkeit nur innerhalb eines begrenzten Temperaturspektrums auf. Daher kann es je nach Umgebungstemperatur erforderlich sein, die Akkumulatoren zu erwärmen oder zu kühlen. Daher weist die Antriebseinheit eines Elektrofahrzeugs in der Regel einen Temperierkreislauf mit einer Rohranordnung auf, durch welche beispielsweise Temperiermedien zu den Zellen des Akkumulators geleitet werden können, um diese innerhalb des gewünschten Temperaturspektrums zu temperieren.

Des Weiteren kann es erforderlich sein, Komponenten der gesamten Antriebseinheit von Elektrofahrzeugen zu temperieren, insbesondere zu kühlen. Hierzu gehören neben den Akkumulatoren die Leistungselektronik und der Elektromotor. Die Ladeelektronik und die dazugehörigen Steckverbindungen und Leitungen können ebenfalls mittels der Temperiereinrichtung gekühlt werden. Dies ist insbesondere im Zusammenhang mit Schnellladevorgängen relevant.

Neben dem Einsatz in einer Antriebseinheit ergibt sich ein weiteres Einsatzgebiet im Zusammenhang mit der übrigen Fahrzeugelektronik, hier insbesondere von Sensoren und Bordcomputern. Ist ein Fahrzeug zum autonomen Fahren ausgerüstet, werden leistungsfähige Sensoren und leistungsfähige Rechner benötigt, wobei die Systeme zumeist redundant vorhanden sind. Dadurch, dass der Bauraum in einem Fahrzeug beschränkt ist, ergeben sich auch bei diesen Systemen besondere Anforderungen an eine Temperiereinrichtung zur Temperierung dieser Komponenten.

Temperiermedien kommen ferner in Klimaanlagen zum Einsatz. Klimaanlagen, insbesondere mobile Klimaanlagen, umfassen eine Rohranordnung, welche den Transport von Temperiermedien zwischen den einzelnen Aggregaten der Klimaanlage ermöglicht. Bei mobilen Klimaanlagen, beispielsweise bei Klimaanlagen für die Klimatisierung von Innenräumen von Fahrzeugen, ist die Rohranordnung ein vergleichsweise komplexes Gebilde. Hinzu kommt, dass weitere Komponenten der Anordnung, beispielsweise Funktionselemente, wie Pumpen, platzsparend in die Anordnung integriert werden sollen. Durch die Integration von Funktionselementen in die Anordnung ergibt sich darüber hinaus der Vorteil, dass der Montageaufwand der Anordnung geringer ist. Dabei muss aber insbesondere im Zuge der Montage der Anordnung sichergestellt werden, dass das Funktionselement verliersicher an der Anordnung gehalten ist.

DE 10 2006 006 469 A1 beschreibt einen Hohlkörper mit einem von dem Hohlkörper umschlossenen Einbauteil. Der Hohlkörper ist als Blasformteil ausgebildet. Das Einbauteil wird während der Herstellung im Blasform-Prozess gegen die noch plastische Innenwandung des Hohlkörpers gedrückt, so dass der Kunststoff des Hohlkörpers eine Ausnehmung des Einbauteils hinterfließt und Hohlkörper und Einbauteil formschlüssig verbindet.

US 5,104,472 beschreibt ein Verfahren zum Herstellen eines blasgeformten Produkts, das einen Grundkörper und ein röhrenförmiges Anbauteil aufweist. Das röhrenförmige Anbauteil ist in die Wandung des Grundkörpers eingebracht und umfasst einen Strömungskanal, der strömungsleitend mit dem Innenraum des Grundkörpers verbunden ist. Grundkörper und röhrenförmiges Anbauteil sind formschlüssig miteinander verbunden.

Der Erfindung liegt die Aufgabe zugrunde, eine Anordnung für den Transport von Medien bereitzustellen, welche kostengünstig herstellbar und einfach montierbar ist.

Diese Aufgabe wird mit den Merkmalen von Anspruch 1 gelöst. Auf vorteilhafte Ausgestaltungen nehmen die Unteransprüche Bezug.

Die erfindungsgemäße Anordnung für den Transport von Medien gemäß Anspruch 1.

Die erfindungsgemäße Anordnung umfasst demnach einen mittels Blasformen hergestellten Grundkörper. Durch das Blasformen ist es möglich, einen einstückigen Grundkörper mit einer komplexen Gestalt herzustellen. Beispielsweise kann der Grundkörper als Verteiler für Medien ausgebildet sein. Dabei kann der Verteiler mehrere Kanäle umfassen, welche in der für den Montageort erforderlichen Gestalt geformt, beispielsweise gekrümmt sein können. Des Weiteren besteht eine große Freiheit in der Wahl der Querschnittsform der Kanäle. Die erfindungsgemäße Anordnung ist darüber hinaus mit wenigstens einem Funktionselement ausgerüstet, welches an dem Grundkörper festgelegt ist. Dabei ist das Funktionselement erfindungsgemäß formschlüssig und stoffschlüssig an dem Grundkörper festgelegt. Durch den Formschluss ist das Funktionselement verliersicher an dem Grundkörper festgelegt, was eine besonders einfache Montage der Anordnung ermöglicht. Des Weiteren kann die Anordnung besonders einfach transportiert werden. Dadurch, dass der Formschluss durch Umformung des Grundkörpers während des Blasformens gebildet ist, ist die Anordnung darüber hinaus in hohen Stückzahlen kostengünstig herstellbar.

Bei der formschlüssigen Verbindung bilden sich aus dem Grundkörper während der Formgebung im Blasformverfahren Formschlusselemente aus, welche in das Funktionselement eingreifen und eine verliersichere Verbindung bewirken. Für die stoffschlüssige Verbindung kann das Material des Grundkörpers während des Blasformens unter Einwirkung von Wärme erweichen oder anschmelzen und eine stoffschlüssige Verbindung mit dem Funktionselement eingehen, wenn sich der Grundkörper an das Funktionselement anlegt.

Als Material für den Grundkörper kommen vorzugsweise Kunststoffe wie thermoplastische Polymere oder auch thermoplastische Elastomere zum Einsatz. In Abhängigkeit der Druckverhältnisse der in der Anordnung transportierten Medien kann der Grundkörper einschichtig, aber auch mehrschichtig, ausgebildet sein.

Der Grundkörper könnte einen Speicher für die Aufnahme von Medien bilden. Erfindungsgemäß umfasst der Grundkörper einen Strömungskanal, durch welchen durch die Anordnung transportiertes Medium strömen kann. Das Funktionselement umfasst ferner erfindungsgemäß einen weiteren Strömungskanal, wobei vorzugsweise eine strömungsleitende Verbindung zwischen Grundkörper und Funktionselement besteht. Bei dieser Ausgestaltung strömt das durch die Anordnung geleitete Medium durch den Grundkörper und durch das Funktionselement. Dabei kann der Grundkörper das Medium verteilen. In diesem Sinne kann die Anordnung eine Verteilstruktur für Temperiermedium bilden.

Grundkörper und Funktionselement sind erfindungsgemäß derart aneinander festgelegt, dass eine fluiddichte Verbindung zwischen dem Strömungskanal und dem weiteren Strömungskanal hergestellt ist. Dies ermöglicht einen leckagefreien Transport von Temperiermedium.

Zwischen dem Strömungskanal des Grundkörpers und dem Strömungskanal des Funktionselementes ist vorzugsweise eine Dichtung angeordnet. Die Dichtung verschließt den Kontaktbereich zwischen Grundkörper und Funktionselement und verbessert die Dichtheit in diesem Bereich. Die Dichtung kann beispielsweise als O-Ring ausgebildet sein, aber auch als Dichtspur aus thermoplastischem Elastomer direkt an den Grundkörper und/oder das Funktionselement angeformt sein.

Das Funktionselement ist vorzugsweise zumindest teilweise aus Kunststoff ausgebildet. Dadurch ist das Funktionselement kostengünstig und in einer großen Formenvielfalt herstellbar. Vorzugsweise ist das Funktionselement aus einem spritzgießfähigen Kunststoff ausgebildet, wobei der Kunststoff so gewählt ist, dass das Funktionselement während des Blasformvorgangs formstabil ist. Hierzu weist der für das Funktionselement ausgewählte Kunststoff vorzugsweise eine Glasübergangstemperatur auf, welche oberhalb der für das Blasformvorgang notwendigen Temperatur liegt.

Das Funktionselement kann zumindest einen Teil eines Adapters oder einen Adapter bilden. Der Adapter wiederum kann zur Aufnahme eines oder mehrerer Funktionselemente ausgebildet sein. Dabei kann der Adapter verschiedenste Funktionselemente aufnehmen, so dass der Grundkörper flexibel mit Funktionselementen bestückbar ist. Es ist auch denkbar, während des Betriebs Funktionselemente auszutauschen.

Das Funktionselement bildet erfindungsgemäß zumindest einen Teil einer Pumpe. Beispielsweise kann das Funktionselement als Pumpendeckel ausgebildet sein. Ist das Funktionselement als Pumpendeckel ausgebildet, wird zur Vervollständigung der Anordnung noch das Pumpengehäuse auf dem Pumpendeckel montiert. Anschließend kann die gesamte Anordnung verbaut werden. Alternativ ist auch denkbar, dass das Funktionselement einen Abschnitt eines Ventils, beispielsweise einen Ventildeckel bildet.

Alternativ ist es aber auch denkbar, dass das Funktionselement als Adapter, Ventil, Kühler, Sensor, Schlauchadapter oder als ein Teil der vorgenannten Elemente ausgebildet ist.

Das Funktionselement kann Ausnehmungen aufweisen, in welche sich der Grundkörper zur Ausbildung der formschlüssigen Verbindung zumindest teilweise hinein erstreckt. Die Ausnehmungen bilden Teil einer Formschlussgeometrie und ermöglichen die einfache Herstellung einer formschlüssigen Verbindung zwischen Grundkörper und Funktionselement. Vorzugsweise bilden die Ausnehmungen einen Hinterschnitt, so dass die Herstellung einer formschlüssigen Verbindung sichergestellt ist.

Die Anordnung kann eine Verteilstruktur für Temperiermedien bilden. Temperiermedien sind beispielsweise Kühlflüssigkeiten auf der Basis von Wasser. Ist das Funktionselement als Pumpe ausgebildet, kann das Temperiermedium über die Anordnung zu verschiedenen zu temperierenden Einheiten geführt werden. Zu temperierende Einheiten können beispielsweise Akkumulatoren, Motoren, Leistungselektronik, Leistungscomputer oder Wandler von Elektrofahrzeugen sein.

Bei dem erfindungsgemäßen Verfahren zur Herstellung einer Anordnung werden zunächst zumindest ein Funktionselement und ein aus polymerem Material bestehender Vorformling bereitgestellt und in einer Blasform angeordnet, wobei anschließend aus dem Vorformling der Grundkörper ausgeformt wird, wobei sich der Vorformling während des Ausformens zur Herstellung einer Verbindung an das Funktionselement anlegt. Vorzugsweise wird das Funktionselement so an dem Vorformling plaziert, dass das Funktionselement nach Abschluss des Blasformvorgangs außerhalb des Grundkörpers angeordnet ist. Durch den Blasformvorgang verformt sich der Grundkörper dabei so, dass eine formschlüssige Verbindung zwischen Grundkörper und Funktionselement entsteht und das Funktionselement verliersicher an dem Grundkörper gehalten ist. Zusätzlich verbindet sich der Grundkörper auch während des Blasformens stoffschlüssig mit dem Funktionselement.

Vorzugsweise erstreckt sich der Vorformling während des Ausformens zumindest teilweise in die in das Funktionselement eingebrachten Ausnehmungen hinein. Weiter vorzugsweise erstreckt sich der Vorformling während des Ausformens hinter die in den Ausnehmungen ausgebildete Hinterschneidung. Hierzu kann sich der Vorformling während des Ausformens in den Ausnehmungen derart verformen, dass sich eine Hinterschneidung bildet. Durch die Hinterschneidung ist der Grundkörper formschlüssig mit dem Funktionselement verriegelt. Hierzu kann sich der Vorformling beispielsweise pilzkopfartig in den Ausnehmungen ausdehnen.

Nach dem Blasformen kann eine strömungsleitende Verbindung zwischen Grundkörper und Funktionselement hergestellt werden. Während des Blasformens legt sich der Vorformling zur Herstellung des Grundkörpers an das Funktionselement an. Dabei bedeckt der Grundkörper zunächst den weiteren Strömungskanal des Funktionselements. Zur Herstellung einer strömungsleitenden Verbindung kann der Grundkörper im Bereich des Strömungskanals geöffnet werden. Hierzu kann beispielsweise eine Bohrung in die Wand des Grundkörpers eingebracht werden.

Das Funktionselement kann vor dem Blasformen mit einem Dichtelement versehen werden, wobei das Dichtelement vorzugsweise im Bereich des weiteren Strömungskanals angeordnet ist. Beispielsweise kann aus dem weiteren Strömungskanal ein Stutzen ausgeformt sein, welcher von dem Dichtelement, beispielsweise einem O-Ring, abschnittsweise außenumfangsseitig umschlossen ist. Während des Blasformens legt sich der Vorformling an den Stutzen des weiteren Strömungskanals an und umschließt dabei auch das Dichtelement. Durch den während des Blasformvorgangs aufgebrachten Druck liegt dabei der Vorformling, beziehungsweise der daraus entstehende Grundkörper, mit Vorspannung an dem Dichtelement an, so dass eine dauerhaft dichtende Verbindung hergestellt ist. Wird später eine Durchbrechung in den Grundkörper eingebracht, um eine strömungsleitende Verbindung zwischen Strömungskanal und weiterem Strömungskanal herzustellen, ist durch das Dichtelement sichergestellt, dass keine Leckage auftreten kann.

Einige Ausgestaltungen der erfindungsgemäßen Anordnung werden anhand der Figuren näher erläutert. Diese zeigen, jeweils schematisch:
Fig. 1 eine Anordnung in der Draufsicht;
Fig. 2 die Anordnung in der Explosionsdarstellung;
Fig. 3 im Detail die Anordnung im Bereich der Ausnehmungen;
Fig. 4 im Detail die Anordnung im Bereich der Strömungskanäle;
Fig. 5 eine weitere Anordnung im Schnitt.

Die Figuren zeigen eine Anordnung 1 für den Transport von Medien. Bei der vorliegenden Ausgestaltung ist die Anordnung 1 eine Verteilstruktur, welche einen Bestandteil eines Temperierkreislaufs eines Elektrofahrzeugs bildet. Die Anordnung 1 dient dabei dem Transport und der Verteilung von Temperiermedien zur Temperierung von zu temperierenden Elementen des Elektrofahrzeugs, beispielsweise der Akkumulatoren, der Elektromotoren und der Leistungselektronik.

Die Anordnung 1 umfasst einen als Blasformteil ausgebildeten Grundkörper 2 und zwei Funktionselemente 3, welche formschlüssig an den Grundkörper 2 festgelegt sind.

Die Funktionselemente 3 sind aus spritzgießfähigem Kunststoff ausgebildet, wobei die Glasübergangstemperatur des für die Funktionselemente 3 ausgewählten Kunststoffes oberhalb der für den Blasformprozess zur Herstellung des Grundkörpers 2 erforderlichen Temperatur liegt. Bei der vorliegenden Ausgestaltung bilden die Funktionselemente 3 einen Teil einer Pumpe, nämlich einen Pumpendeckel.

In alternativen Ausgestaltungen kann das Funktionselement 3 aber auch als Adapter, Pumpe, Kühler, Sensor, Ventil, Schlauchadapter oder als Teil der vorgenannten Elemente ausgebildet sein.

Die Funktionselemente 3 sind formschlüssig an dem Grundkörper 2 festgelegt. Dabei ist der Formschluss durch Umformung des Vorformlings zum Grundkörper 2 während des Blasformens gebildet. Die Funktionselemente 3 weisen Ausnehmungen 6 auf, wobei die Ausnehmungen 6 jeweils einen Hinterschnitt ausbilden. Der Grundkörper 2 erstreckt sich zur Ausbildung der formschlüssigen Verbindung in die Ausnehmungen 6 hinein. Dabei bilden sich aus dem Grundkörper 2 Vorsprünge 7 auf, die in die Ausnehmungen 6 hineinragen. Die freien Enden der Vorsprünge 7 weiten sich pilzkopfartig aus, so dass eine verliersichere und formschlüssige Verbindung zwischen Grundkörper 2 und Funktionselementen 3 entsteht. Alternativ oder zusätzlich kann sich der Grundkörper 2 während des Blasformens auch stoffschlüssig mit dem Funktionselement 3 verbinden.

Zur Herstellung der Anordnung werden zunächst die Funktionselemente 3 und ein aus polymerem Material bestehender Vorformling bereitgestellt und in einer Blasform angeordnet. In dem Blasformvorgang wird aus dem Vorformling der Grundkörper 2 ausgeformt, wobei sich der Vorformling während des Ausformens an die Funktionselemente 3 anlegt.

Der Grundkörper 2 besteht aus Kunststoff, wobei die Glasübergangstemperatur des für den Grundkörper 2 ausgewählten Kunststoffes unterhalb der Glasübergangstemperatur des für die Funktionselemente 3 ausgewählten Kunststoffes liegt.

Zur Herstellung der formschlüssigen Verbindung erstreckt sich der Vorformling während des Ausformens teilweise in die Ausnehmungen 6 hinein. Dabei bilden sich Vorsprünge 7 aus, welche sich innerhalb der Ausnehmungen 6 aufweiten und sich hinter den Hinterschnitten pilzkopfartig ausdehnen.

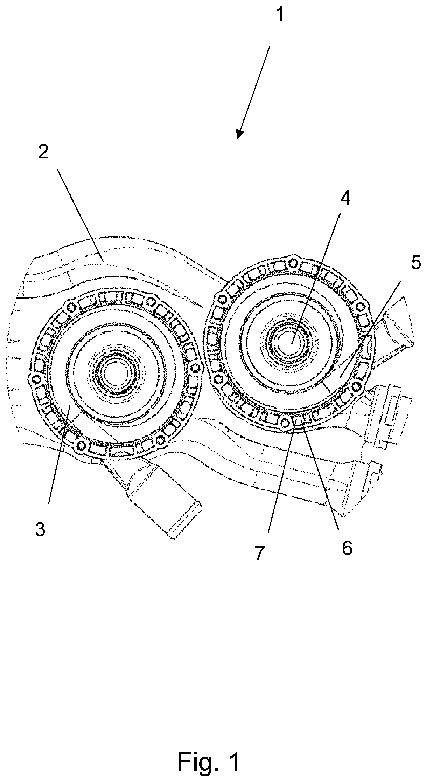

Figur 1 zeigt die Anordnung 1 in der Draufsicht. Die beiden, jeweils einen Pumpendeckel bildenden Funktionselemente 3 weisen eine im Wesentlichen kreisförmige Grundform auf. Die Ausnehmungen 6 sind über den Umfang verteilt in den Randbereich der Funktionselemente 3 eingebracht. Aus dem Grundkörper 2 sind zu den Ausnehmungen 6 kongruent ausgebildete Vorsprünge 7 ausgeformt, wobei sich die Vorsprünge 7 in die Ausnehmungen 6 hinein erstrecken.

Der Grundkörper 2 weist mehrere Strömungskanäle 4 auf. Die Funktionselemente 3 wiederum weisen jeweils einen weiteren Strömungskanal 5 auf. Dabei besteht eine strömungsleitende Verbindung zwischen Grundkörper 2 und Funktionselement 3, wobei jeweils ein Strömungskanal 4 in den weiteren Strömungskanal 5 der Funktionselemente 3 mündet.

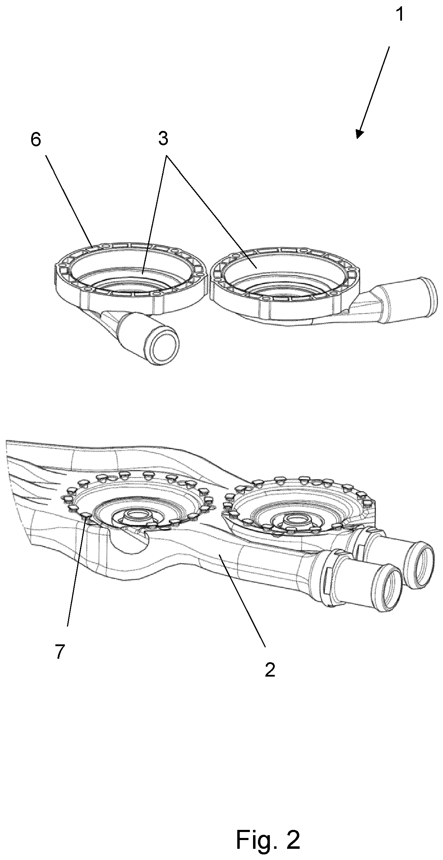

Figur 2 zeigt die in Figur 1 gezeigte Anordnung 1 als Explosionsdarstellung. Zu erkennen ist, dass der Grundkörper 2 im Bereich der Funktionselemente 3 kongruent zu den Funktionselemente 3 ausgeformt ist, was eine besonders platzsparende Integration der Funktionselemente 3 in dem Grundkörper 2 ermöglicht. Es ist auch zu erkennen, dass die Funktionselemente 3 weitere Strömungskanäle 5 und zu den weiteren Strömungskanälen 5 gehörende Zuleitungen aufweisen, welche abschnittsweise in den Grundkörper 2 eingebettet sind. Die Anordnung 1 ist ferner mit weiteren Funktionselementen in Form von Schlauchadaptern ausgerüstet, über die die Integration der Anordnung 1 in den Temperierkreislauf des Elektrofahrzeugs erfolgt. Die Befestigung des Grundkörpers 2 an den weiteren Funktionselementen ist ebenfalls durch Umformung des Grundkörpers 2 während des Blasformens erfolgt.

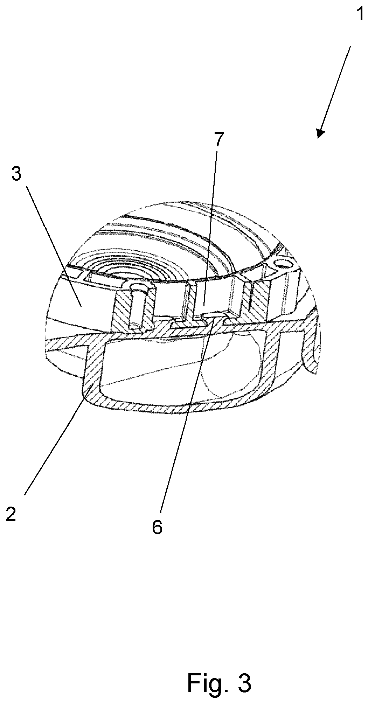

Figur 3 zeigt im Detail und im Schnitt die Anordnung 1 im Bereich der Ausnehmungen 6.

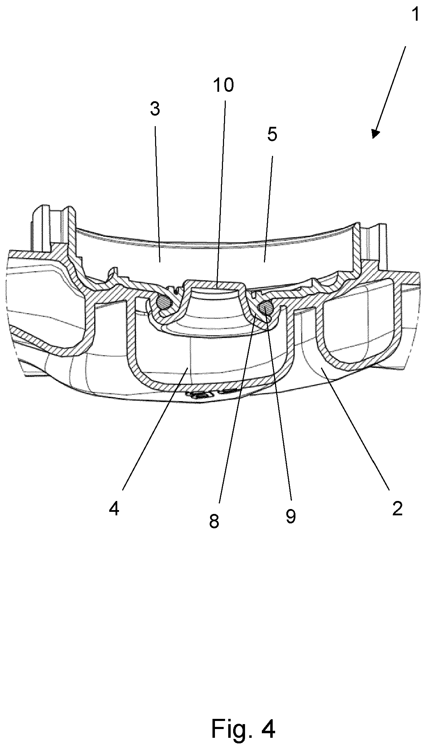

Figur 4 zeigt im Detail die Anordnung 1 im Bereich der strömungsleitenden Verbindung zwischen dem Grundkörper 2 und einem Funktionselement 3. Zu erkennen ist dabei der Strömungskanal 4 des Grundkörpers 2 und der weitere Strömungskanal 5 des Funktionselementes 3.

Aus dem weiteren Strömungskanal 5 ist ein Stutzen 8 ausgeformt, auf welchen außenumfangsseitig eine Dichtung 9 in Form eines O-Ringes aufgesetzt ist. Während des Blasformvorganges legt sich der Vorformling außenseitig an den Stutzen 8 und an die Dichtung 9 an, wobei nach Abschluss des Blasformvorgangs der Grundkörper 2 außenseitig und mit elastischer Vorspannung dichtend an der Dichtung 9 anliegt.

In Figur 4 ist ferner zu erkennen, dass unmittelbar nach dem Blasformen der Grundkörper 2 die strömungsleitende Verbindung zwischen dem Strömungskanal 4 und dem weiteren Strömungskanal 5 versperrt. Zum Herstellen der strömungsleitenden Verbindung wird daher nach Abschluss des Blasformvorgangs der Grundkörper 2 im Bereich der Strömungskanäle durchbrochen. Dies kann beispielsweise durch eine Bohrung erfolgen. Dabei wird der scheibenförmige Abschnitt 10 zumindest teilweise entfernt.

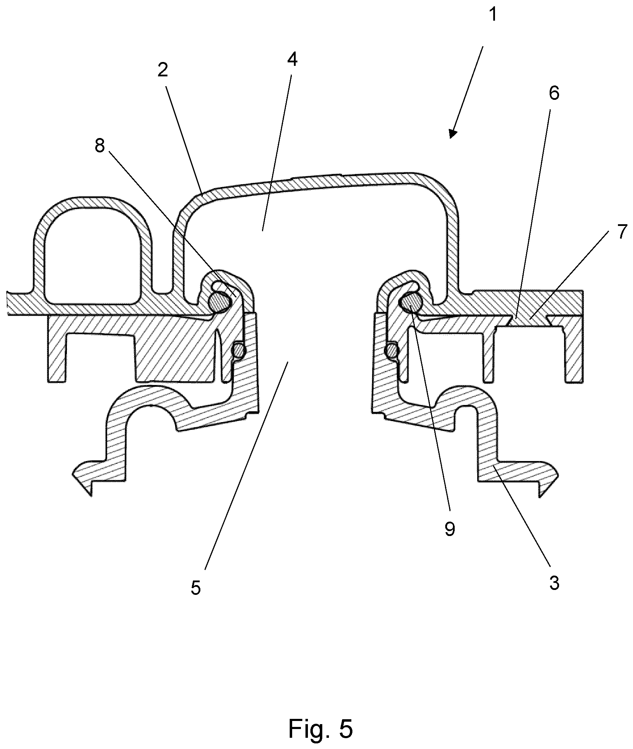

Figur 5 zeigt eine weitere Anordnung 1. Die hier gezeigte Anordnung 1 entspricht im Wesentlichen der zuvor gezeigten Anordnung 1. Dabei ist aber das Funktionselement 3 bei dieser Ausgestaltung als Adapter in Form einer Adapterplatte ausgebildet. Die Adapterplatte dient der Aufnahme weiterer Funktionselemente, beispielsweise von Sensoren, Pumpen oder Ventilen.

## Patentansprüche

1. Anordnung (1) für den Transport von Medien, umfassend einen als Blasformteil ausgebildeten Grundkörper (2) und zumindest ein Funktionselement (3), wobei das Funktionselement (3) formschlüssig an dem Grundkörper (2) festgelegt ist, wobei die Verbindung von Grundkörper (2) und zumindest einem Funktionselement (3) durch Umformung des Grundkörpers (2) während des Blasformens gebildet ist, wobei der Grundkörper (2) zumindest einen Strömungskanal (4) umfasst, wobei das Funktionselement (3) zumindest einen weiteren Strömungskanal (5) umfasst, wobei die Verbindung von Grundkörper (2) und zumindest einem Funktionselement (3) eine stoffschlüssige Verbindung ist, wobei Grundkörper (2) und Funktionselement (3) derart aneinander festgelegt sind, dass eine fluiddichte Verbindung zwischen dem Strömungskanal (4) und dem weiteren Strömungskanal (5) hergestellt ist, **dadurch gekennzeichnet, dass** das Funktionselement (3) als Pumpe oder als ein Teil einer Pumpe ausgebildet ist.

2. Anordnung nach Anspruch 1, **dadurch gekennzeichnet, dass** zumindest eine strömungsleitende Verbindung zwischen dem Grundkörper (2) und dem Funktionselement (3) besteht.

3. Anordnung nach Anspruch 1 oder 2, **dadurch gekennzeichnet, dass** das Funktionselement (3) zumindest teilweise aus Kunststoff ausgebildet ist.

4. Anordnung nach einem der Ansprüche 1 bis 3, **dadurch gekennzeichnet, dass** die Anordnung (1) eine Verteilstruktur für Temperiermedien bildet.

5. Anordnung nach einem der Ansprüche 1 bis 4, **dadurch gekennzeichnet, dass** ein weiteres Funktionselement (3) als Adapter, Pumpe, Kühler, Sensor, Ventil, Schlauchadapter oder als ein Teil der vorgenannten Elemente ausgebildet ist.

6. Anordnung nach einem der Ansprüche 1 bis 5, **dadurch gekennzeichnet, dass** das Funktionselement (3) Ausnehmungen (6) aufweist, in welche sich der Grundkörper (2) zur Ausbildung der formschlüssigen Verbindung zumindest teilweise hinein erstreckt.

7. Anordnung nach Anspruch 6, **dadurch gekennzeichnet, dass** die Ausnehmungen (6) einen Hinterschnitt ausbilden.

8. Verfahren zur Herstellung einer Anordnung (1) nach einem der vorherigen Ansprüche, bei welchem zumindest ein Funktionselement (3) und ein aus polymerem Material bestehender Vorformling bereitgestellt und in einer Blasform angeordnet werden, wobei aus dem Vorformling der Grundkörper (2) ausgeformt wird, wobei sich der Vorformling während des Ausformens zur Herstellung einer formschlüssigen und stoffschlüssigen Verbindung an das Funktionselement (3) anlegt, **dadurch gekennzeichnet, dass** das Funktionselement (3) eine Pumpe oder ein Teil einer Pumpe ist.

9. Verfahren nach Anspruch 8, **dadurch gekennzeichnet, dass** sich der Vorformling während des Ausformens zumindest teilweise in die Ausnehmungen (6) hinein erstreckt.

10. Verfahren nach Anspruch 8 oder 9, **dadurch gekennzeichnet, dass** sich der Vorformling während des Ausformens in den Ausnehmungen (6) derart verformt, dass sich eine Hinterschneidung bildet.

11. Verfahren nach einem der Ansprüche 8 bis 10, **dadurch gekennzeichnet, dass** nach dem Blasformen eine strömungsleitende Verbindung zwischen dem Grundkörper (2) und dem Funktionselement (3) hergestellt wird.

## Claims

1. Arrangement (1) for the transport of media, comprising a main body (2) designed as a blow-molded part and at least one functional element (3), the functional element (3) being fixed to the main body (2) in a form-fitting manner, the connection between the main body (2) and the at least one functional element (3) being formed by reshaping the main body (2) during blow-molding, the main body (2) comprising at least one flow channel (4), the functional element (3) comprising at least one further flow channel (5), the connection between the main body (2) and the at least one functional element (3) being an integral bond, the main body (2) and the functional element (3) being fixed to one another in such a way that a fluid-tight connection is produced between the flow channel (4) and the further flow channel (5), **characterized in that** the functional element (3) is designed as a pump or as part of a pump.

2. Arrangement according to claim 1, **characterized in that** at least one flow-conducting connection exists between the main body (2) and the functional element (3).

3. Arrangement according to claim 1 or 2, **characterized in that** the functional element (3) is at least partially made of plastics material.

4. Arrangement according to any of claims 1 to 3, **characterized in that** the arrangement (1) forms a distribution structure for temperature-regulating media.

5. Arrangement according to any of claims 1 to 4, **characterized in that** a further functional element (3) is designed as an adapter, pump, cooler, sensor, valve, hose adapter or as a part of the aforementioned elements.

6. Arrangement according to any of claims 1 to 5, **characterized in that** the functional element (3) comprises recesses (6) into which the main body (2) at least partially extends in order to form the form-fitting connection.

7. Arrangement according to claim 6, **characterized in that** the recesses (6) form an undercut.

8. Method for producing an arrangement (1) according to any of the preceding claims, in which at least one functional element (3) and a preform which consists of polymeric material are provided and arranged in a blow mold, the main body (2) being formed from the preform, and the preform abutting the functional element (3) during the molding process in order to produce a form-fitting connection and integral bond, **characterized in that** the functional element (3) is a pump or part of a pump.

9. Method according to claim 8, **characterized in that** the preform at least partially extends into the recesses (6) during molding.

10. Method according to claim 8 or 9, **characterized in that,** during the molding process, the preform is reshaped in the recesses (6) in such a way that an undercut is formed.

11. Method according to any of claims 8 to 10, **characterized in that,** after blow molding, a flow-conducting connection is produced between the main body (2) and the functional element (3).

## Revendications

1. Agencement (1) pour le transport de milieux, comprenant un corps de base (2) conçu sous forme de pièce moulée par soufflage et au moins un élément fonctionnel (3), dans lequel l'élément fonctionnel (3) est fixé par complémentarité de formes au corps de base (2), dans lequel la liaison entre le corps de base (2) et au moins un élément fonctionnel (3) est réalisée par déformation du corps de base (2) pendant le moulage par soufflage, dans lequel le corps de base (2) comprend au moins un canal d'écoulement (4), dans lequel l'élément fonctionnel (3) comprend au moins un autre canal d'écoulement (5), dans lequel la liaison du corps de base (2) et d'au moins un élément fonctionnel (3) est une liaison par complémentarité de matières, dans lequel le corps de base (2) et l'élément fonctionnel (3) sont fixés l'un à l'autre de telle sorte qu'une liaison étanche aux fluides est établie entre le canal d'écoulement (4) et l'autre canal d'écoulement (5), **caractérisé en ce que** l'élément fonctionnel (3) est conçu comme une pompe ou comme une partie d'une pompe.

2. Agencement selon la revendication 1, **caractérisé en ce qu'au** moins une liaison conduisant l'écoulement est constituée entre le corps de base (2) et l'élément fonctionnel (3).

3. Agencement selon la revendication 1 ou 2, **caractérisé en ce que** l'élément fonctionnel (3) est conçu au moins partiellement en matière plastique.

4. Agencement selon l'une des revendications 1 à 3, **caractérisé en ce que** l'agencement (1) forme une structure de distribution pour des milieux de régulation de température.

5. Agencement selon l'une des revendications 1 à 4, **caractérisé en ce qu'un** autre élément fonctionnel (3) est conçu sous la forme d'un adaptateur, d'une pompe, d'un refroidisseur, d'un capteur, d'une vanne, d'un adaptateur de tuyau ou sous la forme d'une partie des éléments précités.

6. Agencement selon l'une des revendications 1 à 5, **caractérisé en ce que** l'élément fonctionnel (3) présente des évidements (6), dans lesquels le corps de base (2) s'étend au moins partiellement pour concevoir la liaison par complémentarité de formes.

7. Agencement selon la revendication 6, **caractérisé en ce que** les évidements (6) conçoivent une contre-dépouille.

8. Procédé de fabrication d'un agencement (1) selon l'une des revendications précédentes, dans lequel au moins un élément fonctionnel (3) et une préforme constituée d'un matériau polymère sont mis à disposition et agencés dans un moule de soufflage, dans lequel le corps de base (2) est formé à partir de la préforme, dans lequel la préforme s'applique contre l'élément fonctionnel (3) pendant le formage pour établir une liaison par complémentarité de formes et de matières, **caractérisé en ce que** l'élément fonctionnel (3) est une pompe ou une partie d'une pompe.

9. Procédé selon la revendication 8, **caractérisé en ce que** la préforme s'étend au moins partiellement dans les évidements (6) pendant le formage.

10. Procédé selon la revendication 8 ou 9, **caractérisé en ce que,** pendant le formage, la préforme se déforme dans les évidements (6) de manière à réaliser une contre-dépouille.

11. Procédé selon l'une des revendications 8 à 10, **caractérisé en ce qu'**après le moulage par soufflage, une liaison conduisant l'écoulement est établie entre le corps de base (2) et l'élément fonctionnel (3).
